# FASCICULE DE BREVET EUROPEEN

(11) **EP 3 924 241 B1**
(45) Date de publication et mention de la délivrance du brevet: **06.03.2024**
(21) Numéro de dépôt: 20700715.4
(22) Date de dépôt: 16.01.2020
(51) Int. Cl.: B62D 33/027, B60J 5/10, B60J 5/12, B62D 33/03

(54) **PORTE POUR PICK-UP**
TÜR FÜR EINEN PICK-UP
DOOR FOR A PICK-UP

(30) Priorité: 11.02.2019 FR 1901327
(43) Date de publication de la demande: 22.12.2021
(73) Titulaire: Renault s.a.s, 92100 Boulogne Billancourt (FR)
(72) Inventeur: SOLDANO, Sebastien, Rafaela, Santa Fe (AR)
(74) Mandataire: Renault Group
(86) Numéro de dépôt international: PCT/EP2020/050961
(87) Numéro de publication internationale: WO 2020/164842

(56) Documents cités:
- DE-U1-202017 102 642
- FR-A1- 2 821 110
- US-A- 3 309 133
- US-A1- 2012 032 473
- US-B1- 6 364 392

## Description

L'invention concerne une porte pour véhicule automobile, particulièrement adaptée pour son montage à l'arrière d'un véhicule de type camionnette, notamment à plateau découvert du genre pick-up. L'invention porte aussi sur un véhicule automobile comprenant une telle porte, notamment un pick-up.

Un pick-up est un véhicule comprenant généralement à l'avant une cabine fermée, à deux ou quatre portes, et à l'arrière un compartiment ouvert vers le haut formé par un plateau de chargement entouré de ridelles verticales latérales et fermé à l'arrière par une porte arrière verticale basse ouvrante, généralement de même hauteur que les ridelles. La porte arrière s'ouvre sous forme d'un hayon articulé sur un axe horizontal transversal situé au bas de la porte et au niveau du plateau. En position ouverte, la porte se bloque en position horizontale, prolongeant le plateau. Le document FR 2 821 110 A1 divulgue une structure de porte de type pick-up, permettant d'escamoter la porte au niveau du pare-chocs.

Le document DE 20 2017 102 642 U1 présente une structure de porte de type pick-up équipé de volets permettant une ouverture verticale vers le bas afin de libérer de la place pour un système d'attelage.

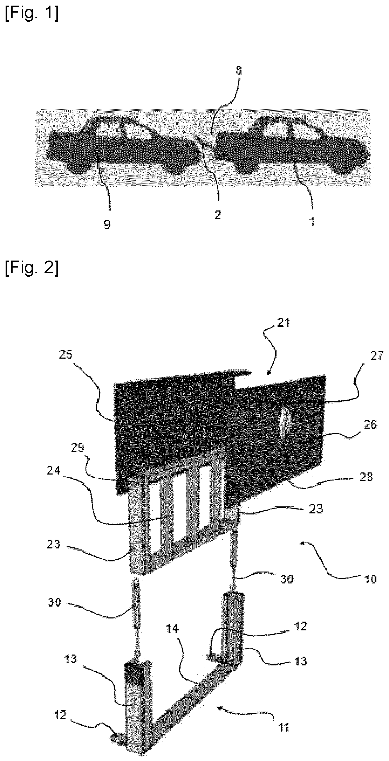

Un tel pick-up présente un inconvénient dans certaines situations. La figure 1 illustre par exemple une situation problématique pour un pick-up 1 de l'état de la technique, stationné dans une voie de stationnement longitudinale, devant un autre véhicule 9. Dans un tel stationnement, l'espace entre les deux véhicules 1, 9 peut être réduit. Dans un cas extrême tel que représenté, la porte arrière 2 du pick-up 1 ne peut même pas être ouverte, au risque de heurter et endommager le véhicule 9 stationné derrière le pick-up. De plus, même si l'espace est plus important entre les deux véhicules, il deviendrait réduit après ouverture de la porte arrière 2 du pick-up, ce qui rendrait difficile l'accès au chargement par une personne 8.

Le but de l'invention est de fournir une porte pour véhicule remédiant aux inconvénients mentionnés ci-dessus de l'état de la technique.

En particulier, un objet de l'invention est de permettre à une personne d'accéder au mieux au chargement d'un véhicule dans toutes les situations, même en cas d'espace réduit autour dudit véhicule.

Un autre objet de l'invention est de proposer une ouverture simple et conviviale d'un véhicule automobile.

A cet effet, l'invention repose sur une porte pour véhicule automobile, notamment pour un pick-up, comprenant une première structure comprenant des éléments de liaison en partie inférieure conçus pour le montage de la porte sur un véhicule automobile, caractérisée en ce que la porte comprend une deuxième structure montée mobile verticalement relativement à la première structure de la porte.

La première structure peut comprendre au moins deux glissières, et le déplacement vertical de la deuxième structure de la porte relativement à la première structure peut être guidé par lesdites glissières de la première structure.

Les deux structures peuvent être liées entre elles par au moins un vérin télescopique, notamment positionné dans une glissière de la première structure.

La deuxième structure peut se présenter sous la forme d'une paroi, apte à occuper une première position basse dans laquelle elle est sensiblement totalement superposée à la première structure pour fermer une ouverture, et apte à occuper une deuxième position haute, dans laquelle elle libère au moins partiellement un espace au niveau de la première structure pour ouvrir au moins partiellement la porte.

La porte pour véhicule automobile peut comprendre un dispositif amortisseur permettant d'amortir le déplacement de la deuxième structure relativement à la première structure.

La deuxième structure peut comprendre une armature disposée entre deux panneaux d'habillage.

Les éléments de liaison de la première structure peuvent être conçus pour le montage en rotation de la première structure sur un véhicule automobile.

La porte peut comprendre deux éléments d'actionnement permettant respectivement de mettre en oeuvre une première ouverture de la porte d'un premier type et une deuxième ouverture de la porte d'un deuxième type différent de la première ouverture.

L'invention porte aussi sur un véhicule automobile, caractérisé en ce qu'il comprend au moins une porte telle que décrite précédemment, notamment une porte arrière.

Le véhicule automobile peut être une camionnette ou un pick-up.

Ces objets, caractéristiques et avantages de la présente invention seront exposés en détail dans la description suivante d'un mode d'exécution particulier fait à titre non-limitatif en relation avec les figures jointes parmi lesquelles :
[Fig. 1] La figure 1 représente une situation particulière lors du stationnement d'un pick-up selon l'état de la technique.
[Fig. 2] La figure 2 représente en perspective éclatée une porte selon un mode de réalisation de l'invention.
[Fig. 3] La figure 3 représente en perspective la porte de la figure 1 partiellement assemblée.
[Fig. 4] La figure 4 représente en perspective un premier type d'ouverture de la porte selon le mode de réalisation de l'invention.
[Fig. 5] La figure 5 représente en perspective un deuxième type d'ouverture de la porte selon le mode de réalisation de l'invention.
[Fig. 6-12] Les figures 6 à 12 représentent le fonctionnement de la porte selon le mode de réalisation de l'invention dans une utilisation traditionnelle.
[Fig. 13-18] Les figures 13 à 18 représentent le fonctionnement de la porte selon le mode de réalisation de l'invention dans une utilisation alternative.

Pour simplifier la description, nous utiliserons par convention la direction longitudinale pour la direction orientée de l'arrière vers l'avant d'un véhicule. La direction transversale sera la direction perpendiculaire à la direction longitudinale, orientée de la gauche vers la droite. Les deux directions longitudinale et transversale définissent un plan horizontal. Enfin, la direction verticale est la direction perpendiculaire aux deux précédentes, orientée de bas en haut. Dans la suite de la description, les termes « haut » ou « supérieur », et « bas » ou « inférieur » sont définis en référence à cette direction verticale. Ces mêmes directions seront utilisées de manière étendue pour la description d'une porte de véhicule automobile, en la considérant telle qu'elle est conçue pour un montage sur un véhicule automobile.

En complément, les termes de « intérieur » et « extérieur » seront utilisés en référence à un véhicule automobile, pour désigner respectivement une orientation vers l'intérieur et vers l'extérieur dudit véhicule automobile.

Les figures 1 et 2 représentent une porte 10 selon un mode de réalisation de l'invention, particulièrement intéressante pour son montage à l'arrière d'un pick-up.

La porte 10 comprend d'abord une première structure 11, comprenant une traverse transversale 14 en partie basse, prolongée vers l'intérieur au niveau de ses extrémités latérales par des éléments de liaison 12. De plus, sur chaque extrémité latérale, elle comprend une glissière 13 verticale.

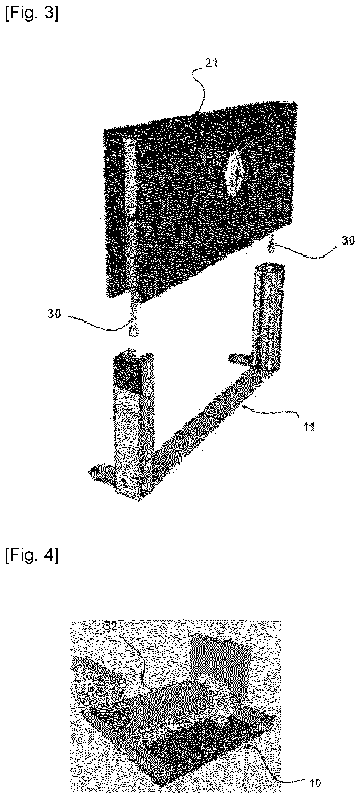

La porte 10 comprend une deuxième structure 21, comprenant une armature 24. Selon le mode de réalisation, cette armature 24 présente une forme d'échelle, comprenant deux traverses transversales superposées dans la direction verticale, reliées par des montants verticaux. Les deux montants verticaux latéraux 23 comprennent chacun une protubérance 29. La deuxième structure comprend de plus un panneau extérieur 26 et un panneau intérieur 25, destinés à recouvrir l'armature 24 pour l'habiller, formant une paroi représentée par la figure 3. Deux éléments d'actionnement, 27, 28, par exemple deux boutons de commande, sont agencés dans le panneau extérieur 26, prévus pour l'actionnement de la porte par un utilisateur, comme cela sera détaillé par la suite.

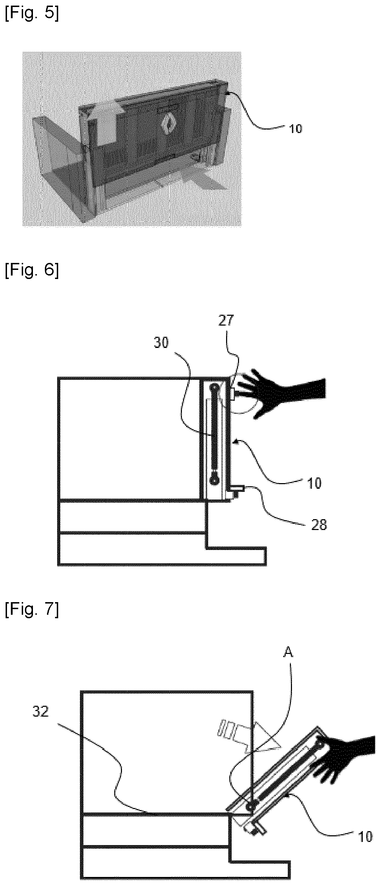

Les deux structures 11, 21 de la porte 10 sont reliées entre elles par des vérins télescopiques 30 agencés latéralement. Chaque vérin télescopique est destiné à un logement au sein d'une glissière 13 de la première structure 11. Il prend un premier appui en partie basse au fond de la glissière, et son extrémité supérieure vient coopérer avec l'armature 24 de la deuxième structure, notamment par une liaison sous une protubérance 29, formant un deuxième appui. Par cet agencement, la deuxième structure 21 de la porte 10 est mobile verticalement relativement à la première structure 11, comme représenté schématiquement par la figure 5. En remarque, dans ce mouvement, chaque montant latéral 23 de la deuxième structure 21 coopère avec une glissière 13 de la première structure 11, de sorte à guider le déplacement de la deuxième structure. Selon le mode de réalisation, la porte 10 est destinée à un montage en partie arrière d'un pick-up. Les éléments de liaison 12 de la première structure 11 sont ainsi fixés au plateau 32 d'un pick-up, de sorte que la porte 10 est montée en rotation autour d'un axe transversal dans sa partie inférieure relativement au pick-up, comme illustré schématiquement par la figure 4.

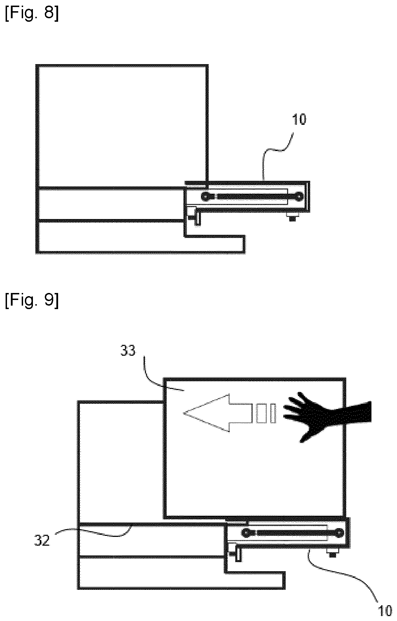

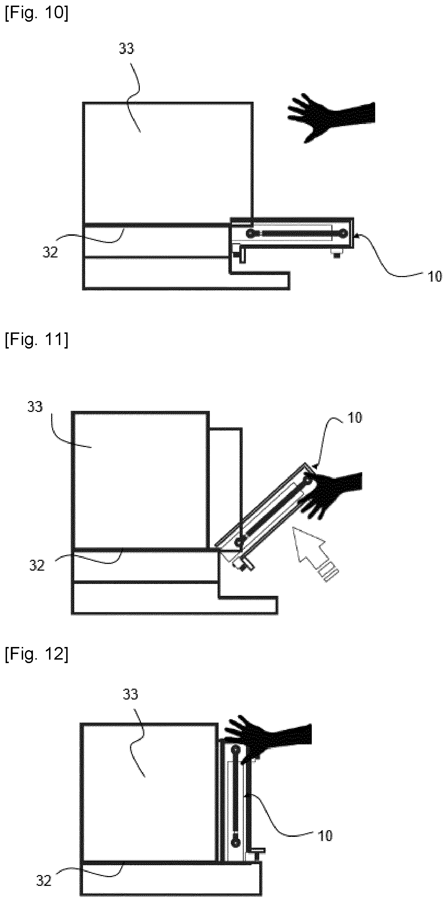

Les figures 6 à 8 illustrent schématiquement l'utilisation de la porte selon le mode de réalisation de l'invention reposant sur la mise en oeuvre d'une première ouverture d'un premier type. Sur la figure 6, un utilisateur actionne la porte 10 par l'intermédiaire d'un premier élément d'actionnement 27. Cette action déclenche le pivotement de la porte 10 autour d'un axe de rotation A transversal positionné au niveau du plateau 32 du véhicule automobile, comme représenté par la figure 7. Cette ouverture est poursuivie jusqu'à la position finale d'équilibre illustrée sur la figure 8. En remarque, dans cette dernière position, la porte 10 s'étend horizontalement, dans la continuité du plateau 32. Sa structure avec armature 24 lui permet de supporter une charge 33. L'utilisateur peut alors faire coulisser une charge depuis la porte 10 jusqu'au plateau 32 du véhicule, comme illustré par les figures 9 et 10. Ensuite, l'utilisateur peut remonter la porte 10 dans sa position initiale, par un pivotement en sens inverse, représenté par les figures 11 et 12.

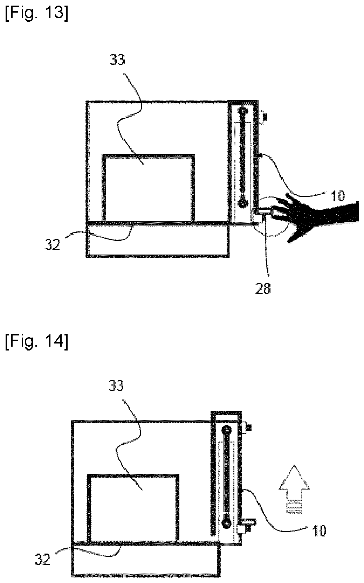

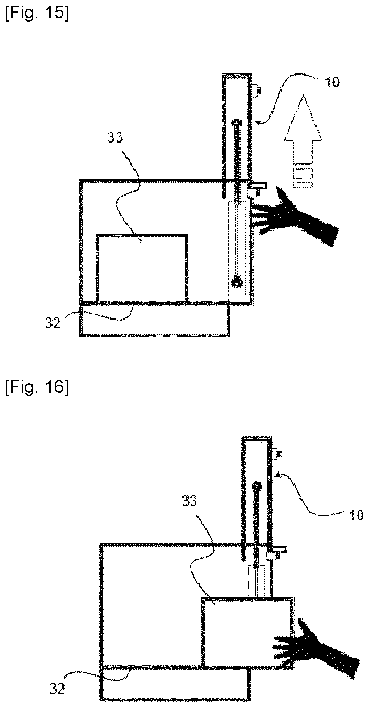

Les figures 13 à 15 illustrent schématiquement l'utilisation de la porte selon le mode de réalisation de l'invention reposant sur la mise en oeuvre d'une deuxième ouverture d'un deuxième type. Sur la figure 13, un utilisateur actionne la porte 10 par l'intermédiaire d'un deuxième élément d'actionnement 28. Cette action déclenche le déplacement vers le haut de la deuxième structure 21 relativement à la première structure 11 de la porte 10. Ce déplacement est guidé par les glissières verticales 13. Il est de type translation verticale. Cette ouverture est poursuivie jusqu'à la position finale d'équilibre illustrée sur la figure 15. En remarque, dans cette dernière position, la partie basse de la deuxième structure 21 vient sensiblement se positionner au niveau de la partie haute de la première structure 11. Il en résulte un espace libre sous la deuxième structure 21, au niveau de la première structure 11 de la porte 10, permettant à un utilisateur d'accéder à la charge 33 positionnée sur le plateau 32, comme représenté par les figures 15 et 16. Dans cette deuxième ouverture de la porte 10, l'encombrement arrière est fortement réduit du fait de l'ouverture verticale de la porte.

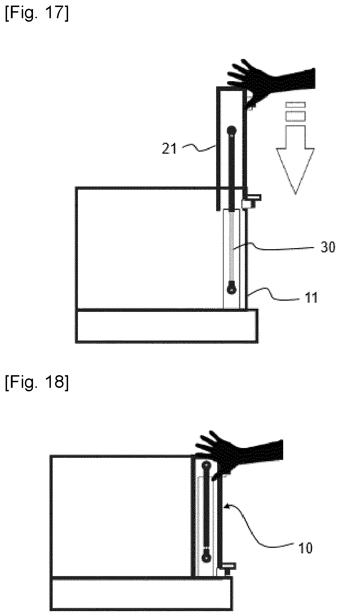

Les figures 17 et 18 illustrent schématiquement la fermeture de la porte 10, qui est obtenue par le coulissement inverse vers le bas de la deuxième structure relativement à la première structure, jusqu'à retrouver la position initiale de fermeture de la porte.

En remarque, la porte 10 est avantageusement équipée de deux verrous, permettant respectivement de verrouiller ou déverrouiller chacun des deux types d'ouverture de la porte.

Naturellement, l'invention ne se limite pas au mode de réalisation décrit. Notamment, la deuxième structure de la porte pourrait être mobile verticalement relativement à la première structure par tout autre moyen que celui décrit. Elle peut comprendre au moins un vérin ou au moins un bras télescopique. Avantageusement, elle comprend un dispositif amortisseur permettant d'amortir son déplacement. Ce mouvement vertical peut ne pas être une translation verticale. En effet, il pourrait s'agir d'un coulissement comprenant par exemple une composante longitudinale. Ce coulissement est défini par au moins deux glissières de la première structure. Nous entendons donc par déplacement vertical tout déplacement comprenant une composant verticale non négligeable, de sorte que la partie inférieure de la deuxième structure s'élève suffisamment pour dégager un accès à l'intérieur du véhicule automobile. De plus, la porte pourrait être reliée différemment au véhicule automobile que la liaison décrite. Ainsi, l'invention porte finalement sur une porte animée d'un premier mouvement relativement à un véhicule, de préférence une rotation, mais qui pourrait en variante consister en un autre mouvement, pour procéder à une première ouverture, et animée d'un deuxième mouvement différent, par le déplacement vertical d'une deuxième structure de la porte relativement à une première structure, de sorte à mettre en oeuvre une deuxième ouverture de la porte, avec encombrement arrière ou latéral réduit.

Il a été décrit ci-dessus une porte adaptée pour un agencement à l'arrière d'un pick-up. Naturellement, une telle porte pourrait être utilisée sur d'autres véhicules automobiles, par exemple une camionnette. De plus, elle pourrait être agencée sur un côté d'un plateau d'un pick-up, non nécessairement à l'arrière. Enfin, elle pourrait prendre une autre forme, n'occuper qu'une partie seulement du côté arrière, ou être plus haute pour s'adapter à un autre type de véhicules.

## Revendications

1. Porte (10) pour véhicule automobile, notamment pour un pick-up, comprenant une première structure (11) comprenant des éléments de liaison (12) en partie inférieure conçus pour le montage de la porte (10) sur un véhicule automobile, **caractérisée en ce que** la porte (10) comprend une deuxième structure (21) montée mobile verticalement relativement à la première structure (11) de la porte, la deuxième structure (21) se présentant sous la forme d'une paroi, apte à occuper une première position basse dans laquelle elle est sensiblement totalement superposée à la première structure (11) pour fermer une ouverture, et apte à occuper une deuxième position haute, dans laquelle elle libère au moins partiellement un espace au niveau de la première structure (11) pour ouvrir au moins partiellement la porte (10).

2. Porte (10) pour véhicule automobile selon la revendication précédente, **caractérisée en ce que** la première structure (11) comprend au moins deux glissières (13), et **en ce que** le déplacement vertical de la deuxième structure (21) de la porte (10) relativement à la première structure (11) est guidé par lesdites glissières (13) de la première structure (11).

3. Porte (10) pour véhicule automobile selon l'une des revendications précédentes, **caractérisée en ce que** les deux structures (11, 21) sont liées entre elles par au moins un vérin télescopique (30), notamment positionné dans une glissière (13) de la première structure (11).

4. Porte (10) pour véhicule automobile selon l'une des revendications précédentes, **caractérisée en ce qu'**elle comprend un dispositif amortisseur permettant d'amortir le déplacement de la deuxième structure (21) relativement à la première structure (11).

5. Porte (10) pour véhicule automobile selon l'une des revendications précédentes, **caractérisée en ce que** la deuxième structure (21) comprend une armature (24) disposée entre deux panneaux (25, 26) d'habillage.

6. Porte (10) pour véhicule automobile selon l'une des revendications précédentes, **caractérisée en ce que** les éléments de liaison (12) de la première structure (11) sont conçus pour le montage en rotation de la première structure (11) sur un véhicule automobile.

7. Porte (10) pour véhicule automobile selon l'une des revendications précédentes, **caractérisée en ce qu'**elle comprend deux éléments d'actionnement (27, 28) permettant respectivement de mettre en oeuvre une première ouverture de la porte (10) d'un premier type et une deuxième ouverture de la porte (10) d'un deuxième type différent de la première ouverture.

8. Véhicule automobile, **caractérisé en ce qu'**il comprend au moins une porte selon l'une des revendications précédentes, notamment une porte arrière selon l'une des revendications précédentes.

9. Véhicule automobile selon la revendication précédente, **caractérisé en ce qu'**il est une camionnette ou un pick-up.

## Patentansprüche

1. Tür (10) für ein Kraftfahrzeug, insbesondere für einen Pick-up, die eine erste Struktur (11) umfasst, die im unteren Teil Verbindungselemente (12) umfasst, die zur Anbringung der Tür (10) an einem Kraftfahrzeug gestaltet sind, **dadurch gekennzeichnet, dass** die Tür (10) eine zweite Struktur (21) umfasst, die relativ zu der ersten Struktur (11) der Tür vertikal beweglich angebracht ist, wobei die zweite Struktur (21) in Form einer Wand vorliegt, geeignet ist, eine erste untere Stellung einzunehmen, in der sie im Wesentlichen der ersten Struktur (11) vollständig überlagert ist, um eine Öffnung zu verschließen, und geeignet ist, eine zweite obere Stellung einzunehmen, in der sie einen Raum auf Höhe der ersten Struktur (11) mindestens teilweise freigibt, um die Tür (10) mindestens teilweise zu öffnen.

2. Tür (10) für ein Kraftfahrzeug nach dem vorhergehenden Anspruch, **dadurch gekennzeichnet, dass** die erste Struktur (11) mindestens zwei Schienen (13) umfasst und dass die vertikale Verlagerung der zweiten Struktur (21) der Tür (10) relativ zu der ersten Struktur (11) durch die Schienen (13) der ersten Struktur (11) geführt wird.

3. Tür (10) für ein Kraftfahrzeug nach einem der vorhergehenden Ansprüche, **dadurch gekennzeichnet, dass** die beiden Strukturen (11, 21) untereinander durch mindestens einen Teleskopzylinder (30) verbunden sind, der insbesondere in einer Schiene (13) der ersten Struktur (11) positioniert ist.

4. Tür (10) für ein Kraftfahrzeug nach einem der vorhergehenden Ansprüche, **dadurch gekennzeichnet, dass** sie eine Dämpfervorrichtung umfasst, die es ermöglicht, die Verlagerung der zweiten Struktur (21) relativ zu der ersten Struktur (11) zu dämpfen.

5. Tür (10) für ein Kraftfahrzeug nach einem der vorhergehenden Ansprüche, **dadurch gekennzeichnet, dass** die zweite Struktur (21) ein Gestell (24) umfasst, das zwischen zwei Verkleidungstafeln (25, 26) angeordnet ist.

6. Tür (10) für ein Kraftfahrzeug nach einem der vorhergehenden Ansprüche, **dadurch gekennzeichnet, dass** die Verbindungselemente (12) der ersten Struktur (11) zur schwenkbaren Anbringung der ersten Struktur (11) an einem Kraftfahrzeug gestaltet sind.

7. Tür (10) für ein Kraftfahrzeug nach einem der vorhergehenden Ansprüche, **dadurch gekennzeichnet, dass** sie zwei Betätigungselemente (27, 28) umfasst, die es ermöglichen, ein erstes Öffnen der Tür (10) eines ersten Typs und ein zweites Öffnen der Tür (10) eines zweiten Typs, der von dem ersten Öffnen verschieden ist, durchzuführen.

8. Kraftfahrzeug, **dadurch gekennzeichnet, dass** es mindestens eine Tür nach einem der vorhergehenden Ansprüche umfasst, insbesondere eine Hecktür nach einem der vorhergehenden Ansprüche.

9. Kraftfahrzeug nach dem vorhergehenden Anspruch, **dadurch gekennzeichnet, dass** es ein Lieferwagen oder ein Pick-up ist.

## Claims

1. Door (10) for a motor vehicle, in particular for a pick-up, comprising a first structure (11) comprising connection elements (12) in the lower part which are designed for fitting of the door (10) on a motor vehicle, **characterized in that** the door (10) comprises a second structure (21) which is fitted such as to be movable vertically relative to the first structure (11) of the door, the second structure (21) being in the form of a wall, which can occupy a first, low position, in which it is substantially totally superimposed on the first structure (11), in order to close an opening, and can occupy a second, high position, in which it opens up at least partly a space at the level of the first structure (11), in order to open the door (10) at least partly.

2. Door (10) for a motor vehicle according to the preceding claim, **characterized in that** the first structure (11) comprises at least two slides (13), and **in that** the vertical displacement of the second structure (21) of the door (10) relative to the first structure (11) is guided by said slides (13) of the first structure (11).

3. Door (10) for a motor vehicle according to one of the preceding claims, **characterized in that** the two structures (11, 21) are connected to one another by at least one telescopic jack (30), which in particular is positioned in a slide (13) of the first structure (11).

4. Door (10) for a motor vehicle according to one of the preceding claims, **characterized in that** it comprises a damping device which makes it possible to damp the displacement of the second structure (21) relative to the first structure (11).

5. Door (10) for a motor vehicle according to one of the preceding claims, **characterized in that** the second structure (21) comprises a reinforcement (24) placed between two casing panels (25, 26).

6. Door (10) for a motor vehicle according to one of the preceding claims, **characterized in that** the connection elements (12) of the first structure (11) are designed for fitting of the first structure (11) with rotation on a motor vehicle.

7. Door (10) for a motor vehicle according to one of the preceding claims, **characterized in that** it comprises two actuation elements (27, 28) which make it possible respectively to implement a first opening of the door (10) of a first type, and a second opening of the door (10) of a second type, which is different from the first opening.

8. Motor vehicle, **characterized in that** it comprises at least one door according to one of the preceding claims, in particular a rear door according to one of the preceding claims.

9. Motor vehicle according to the preceding claim, **characterized in that** it is a light truck or a pick-up.
